# EUROPÄISCHE PATENTSCHRIFT

(11) **EP 1 600 278 B1**
(45) Veröffentlichungstag und Bekanntmachung des Hinweises auf die Patenterteilung: **02.09.2009**
(21) Anmeldenummer: 05010692.1
(22) Anmeldetag: 18.05.2005
(51) Int. Cl.: B29C 47/92, B29C 47/16

(54) **Verfahren und Vorrichtung zur Herstellung von flachbahnigen Erzeugnissen**
Method and apparatus for manufacturing flat web products
Procédé et appareil pour la fabrication de produits en bandes plates

(30) Priorität: 18.05.2004 DE 102004025028
(43) Veröffentlichungstag der Anmeldung: 30.11.2005
(73) Patentinhaber: betacontrol GmbH & Co.KG Mess- und Regeltechnik, 57258 Freudenberg (DE)
(72) Erfinder: Hecht, Michael, 51519 Odenthal (DE); Dr. Frank Blecher, 57074 Siegen (DE)
(74) Vertreter: Fechner, Benjamin

(56) Entgegenhaltungen:
- EP-A- 0 287 551
- EP-A- 0 429 161
- US-A- 4 765 941
- US-A- 5 288 441
- US-A- 6 152 720
- PATENT ABSTRACTS OF JAPAN Bd. 012, Nr. 212 (M-710), 17. Juni 1988 (1988-06-17) & JP 63 015725 A (SHOWA DENKO KK), 22. Januar 1988 (1988-01-22)
- PATENT ABSTRACTS OF JAPAN Bd. 011, Nr. 397 (M-655), 25. Dezember 1987 (1987-12-25) & JP 62 164522 A (JAPAN SENSOR CORP:KK), 21. Juli 1987 (1987-07-21)

## Beschreibung

Die Erfindung betrifft ein Verfahren zur Herstellung von flachbahnigen Erzeugnissen, wobei plastisches Material zur Verfügung gestellt wird, das plastische Material in einem Spalt zu einem flachbahnigen Erzeugnis verformt wird, und wobei das flachbahnige Erzeugnis nach Austritt aus dem Spalt in einer Kühlstrecke in Transportrichtung abkühlt.

Die Erfindung betrifft ferner eine Vorrichtung zur Herstellung, insbesondere zur Überwachung und/oder Regelung der Schichtdicke, von flachbahnigen Erzeugnissen, mit einem Spalt, aus dem das flachbahnige Erzeugnis austritt, und mit einer Kühlstrecke, die stromab des Spalts angeordnet ist und in der das flachbahnige Erzeugnis abkühlt.

Als flachbahnige Erzeugnisse kommen insbesondere Kunststofffolien, aber auch beispielsweise Metall oder Glas in Frage. Vereinfachend wird im folgenden nur auf Kunststofffolien Bezug genommen.

Es ist bekannt, Kunststofffolien in Folienextrusionsanlagen zu extrudieren. In diesen wird thermoplastischer Kunststoff zunächst auf eine erhöhte Temperatur gebracht, bis er erweicht. Der erweichte Kunststoff tritt durch einen Spalt (Düse) hindurch, der das plastische Material in Folienform bringt. Nach dem Spaltaustritt wird das Folienmaterial auf einer Kühlstrecke - beispielsweise einer Chill-Roll - abgekühlt.

Stets gilt das Bestreben, eine möglichst gleich dicke Folienbahn über die gesamte Breite herzustellen. Dies ist besonders wichtig bei dünnen Folien. Darüber hinaus ist es wünschenswert, den Randschnitt und sonstigen Verschnitt so gering wie möglich zu halten.

Für die Überwachung der Dicke der Folie bedienen sich einige bekannte Vorrichtungen zur Herstellung von Folien einer Temperaturmessung. Hierbei wird die Temperatur der aus dem Spalt austretenden Folie gemessen, und über die ermittelte Temperatur werden Rückschlüsse auf die Dicke der Folie gezogen. Bei derartigen Temperaturmessungen können Infrarotsensoren zum Einsatz kommen.

So ist aus der DE 690 16 750 T2 beispielsweise ein Verfahren bekannt, bei welchem ein plastisches Material einer stromaufwärtigen Seite eines Spaltes zwischen einem Paar von Walzen zugeführt und durch die Walzen zu einer Folie gepresst und geformt wird, wobei sich eine Anhäufung des plastischen Materials an der stromaufwärtigen Seite des Spaltes bildet. Die Temperatur der die stromabwärtige Seite des Spaltes verlassenden Folien wird gemessen und der Spalt in Abhängigkeit der Temperatur eingestellt. Als Messmittel werden Infrarotstrahlungsthermometer genannt, die berührungslos arbeiten.

Aus der EP 0 273 985 A1 ist es bekannt, mit einem Temperatursensor, beispielsweise einem Infrarotsensor, die Temperatur zu messen und von der gemessenen Temperatur auf Dickenunterschiede über die Breite der Folie zu schließen.

Auch die DE 197 42 755 A1 beschreibt den Einsatz eines Infrarotsensors. Die DE 197 42 755 A1 entspricht der US 6,152,720. Der Infrarotsensor ist als traversierende Messeinheit ausgebildet und kann als solche quer zur Folienbahn verfahren werden. Ein traversierender Messkopf kommt schließlich auch bei der Messvorrichtung gemäß EP 0 0429 161 A1 zum Einsatz.

Allen bekannten Verfahren ist gemein, dass sie die Temperatur ausschließlich quer zur Transportrichtung erfassen.

Aus der US 5,288 441 ist ein Extrusionsverfahren bekannt, bei dem über eine ringförmige Extrusionsdüse schlauchartige Erzeugnisse hergestellt werden. Zur Temperaturüberwachung wird eine Infrarotkamera in einem Bereich eingesetzt, in dem das Erzeugnis noch nicht erstarrt ist. Die Messergebnisse sind technologisch bedingt schwankend.

Der Erfindung liegt die Aufgabe zugrunde, die bekannten Verfahren zur Herstellung von flachbahnigen Erzeugnissen, insbesondere Kunststofffolien, noch weiter zu verbessern, so dass die Regelstrecke weiter verkürzt wird und möglichst wenig Ausschuss entsteht.

Die Erfindung ist zur Lösung dieser Aufgabe erfindungsgemäß **dadurch gekennzeichnet, dass** die Temperatur des flachbahnigen Erzeugnisses nach dem Austritt aus dem Spalt im wesentlichen zu einem Zeitpunkt flächig erfasst wird, dass die über die Fläche ermittelten Messwerte zur Einstellung des Spalts verwendet werden, und dass die Temperatur durch mindestens eine Wärmebildkamera erfasst wird, die auf die Kühlwalze gerichtet ist.

Der Erfindung liegt die Erkenntnis zugrunde, dass eine Messung der Temperatur nicht nur über die Breite der Bahn sondern auch gleichzeitig in Transportrichtung - also insgesamt zweidimensional - eine besonders genaue Bestimmung der Dickenunterschiede in der Bahn zulässt. Erfindungsgemäß lässt sich also ein komplettes Temperaturprofil der Bahn (im gemessenen Abschnitt) erstellen.

Das gesamte zweidimensionale Bild wird mit einer hohen Wiederholungsfrequenz erfasst. Dabei wird die Wärmeinformation (Temperatur) einer Stelle des sich bewegenden Materials mehrfach, vorzugsweise vielfach, zeitlich aufeinander folgend aufgenommen. Es ist also die Erfassung und Verfolgung eines (einzelnen) Punktes möglich. Dessen Temperaturänderung kann somit quasi-kontinuierlich erfasst werden. Gleiches gilt für jeden beliebigen anderen Punkt, wobei erfindungsgemäß eine im wesentlichen gleichzeitige Erfassung mehrerer Punkte möglich ist.

Die Ergebnisse sind geradezu spektakulär. So ist es erstmals möglich, einen seitlichen Quertransport - den so genannten "neck-in" - der Bahn in der Abkühlstrecke sichtbar zu machen. Dabei handelt es sich um einen Randbereich mit Materialanhäufung, die sich aus einem Zusammenziehen der Bahn beim Abkühlen ergibt. Durch die Ermittlung des entsprechenden Temperaturprofils kann dieses eigentlich ungewünschte Phänomen ausgeglichen (geregelt) werden. Dies ist ein wesentlicher Verdienst der Erfindung, durch den der Randschnitt gering gehalten werden kann.

Herkömmlich hingegen war nur eine zeilenweise Erfassung der Temperatur üblich. Hinzu kommt, dass bei einem Verfahren des Sensors bzw. Verschwenken des Messstrahls sich das Folienband, das mit einer hohen Geschwindigkeit läuft, bereits ein Stück abgewickelt hat in dem Zeitraum, in dem der Messstrahl sich von einem Ende bis zum anderen bewegt hat. Dies führte bisher zu einer Art Zick-Zack-Messung. Auch dieser Nachteil ist mit der Erfindung behoben.

Vorzugsweise wird nach der Temperaturmessung eine Messung der Flächenmasse oder der Dicke durchgeführt. Die Messwerte der Temperaturmessung können zusätzlich zu den Messwerten der Temperaturverteilung herangezogen werden, um den Spalt schnell und mit minimaler Totzeit zu regeln. Dabei kann es vorgesehen sein, dass die Flächenmasse- oder Dickenmessung die absolute Messung der Folie ist, während zusätzlich durch die Temperaturmessung die relative erfolgt.

Die Messung der Wärmeverteilung kann schon erheblich früher eingesetzt werden als die Messung der Flächenmasse/Dicke. Vorteilhafterweise beginnt sie im wesentlichen unmittelbar nach dem Spalt. Sofern eine die Kühlstrecke umfassende Kühlwalze (wie sie später noch genauer beschrieben wird) zum Einsatz kommt, kann sie auch beispielsweise mit der Anlage der Bahn auf der Kühlwalze beginnen.

Allgemein wird die bereits zuvor beschriebene Tatsache ausgenutzt, dass zwar im Spalt die Temperatur noch homogen sein mag, dass jedoch nach dem Austritt der Folie dünnere Folienabschnitte schneller auskühlen als dickere. Daher lässt, wenn nach dem Austritt der Folie aus dem Spalt eine ungleichmäßige Wärmeverteilung ermittelt wird, diese Wärmeverteilung Rückschlüsse auf ungleiche Dicke der Folie quer (und auch längs) zur Laufrichtung zu. Die Messwerte lassen sich dann zur Regelung des Spaltes heranziehen.

Es hat sich bewährt, dass die Wärmeverteilung durch Messung mittels Wärmesensoren, vorzugsweise mittels mindestens einer Wärmebildkamera erfolgt.

Von Vorteil ist, wenn die Messwerte der Wärmebildkamera in Verbindung mit den materialspezifischen Daten der Kunststofffolie und/oder der Spaltaustrittstemperatur der Folie und/oder der Kühlleistung oder der Temperatur der Kühlwalze zur Einstellung der gewünschten Flächenmasse/Foliendicke herangezogen werden. In einem Rechner kann mit den entsprechenden materialspezifischen Daten und den Temperaturwerten und ggf. Erfahrungswerten schon zu einem sehr frühen Zeitpunkt die Foliendicke bestimmt werden.

Zweckmäßigerweise wird die Temperatur über eine Anzeigevorrichtung angezeigt. Damit können u.a. dynamische Abweichungen visualisiert werden. Insgesamt ergibt sich ein effektives Werkzeug zur Inspektion und Fehleranalyse.

Vorzugsweise erstreckt sich die Messung über die gesamte Breite der Folie. Es ist zwar möglich, nur die (eher kritischen) Randbereiche zu erfassen, jedoch schafft eine komplette ganzflächige Überwachung zusätzliche Sicherheit und Übersicht über die gesamte Bahnbeschaffenheit. Im Betrieb wird man bei Bedarf ggf. bestimmte Bereiche herauszoomen. Auch ist die Anordnung mehrerer Kameras neben-und/oder übereinander denkbar, die auch mit unterschiedlichen Auflösungen bzw. Vergrößerungen arbeiten können.

Grundsätzlich kann der Spalt durch eine Extrusionsdüse gebildet werden. Diese ist über ihre Breite mittels einzelner Bolzen einstellbar. In der Praxis können 100 und mehr Bolzen vorgesehen sein. Es ist also eine sehr genaue Abstimmung möglich, wie sie insbesondere in den Randbereichen dank der Erfindung nunmehr effektiv einsetzbar ist.

Alternativ kann der Spalt durch zwei Walzen gebildet sein. Die Walzenspaltregelung erfolgt dann durch Regelung des Spaltabstands der Walzen zueinander und/oder durch Verschränkungsregelung der Walzen zueinander und/oder durch Biegeregelung und/oder durch Regelung der Winkelgeschwindigkeit der Walzen und/oder durch Abzugsregelung und/oder durch Einstellung der Balligkeit der Walzen vorzugsweise mittels Heißluft bzw. Infrarotstrahlen.

Die eingangs genannte Aufgabe wird ferner gelöst durch eine Vorrichtung zur Herstellung, insbesondere zur Überwachung und/oder Regelung der Schichtdicke, von flachbahnigen Erzeugnissen, mit einem Spalt, aus dem das flachbahnige Erzeugnis austritt, und mit einer Kühlstrecke, die stromab des Spalts angeordnet ist und in der das flachbahnige Erzeugnis abkühlt, wobei die Vorrichtung dadurch gekennzeichnet ist, dass mindestens eine Wärmebildkamera mit einem zweidimensionalen Sensor-Array vorgesehen ist, die im Bereich der Kühlstrecke die Temperatur flächig erfasst, dass die Wärmebildkamera mit einem Rechner in Verbindung steht, der den Spalt regelt, und dass benachbart zu dem Spalt eine Kühlwalze angeordnet ist, die zumindest zum Teil die Kühlstrecke bildet, wobei die Wärmebildkamera auf die Kühlwalze gerichtet ist.

Erfindungsgemäß ist es also möglich, konkrete Punkte des flachbahnigen Erzeugnisses kontinuierlich zu erfassen.

Benachbart zu dem Spalt ist eine Kühlwalze angeordnet, die zumindest zum Teil die Kühlstrecke bildet, wobei die Wärmebildkamera auf die Kühlwalze gerichtet ist. Alternativ oder zusätzlich kann die Kühlstrecke aus einem Wasser- oder Ölbad bestehen. Gleichermaßen möglich ist es, mit Luft zu kühlen. Allgemein sind sowohl passive als auch aktive Kühlungen denkbar.

Zusätzlich zu der Wärmebildkamera kann - wie zuvor angedeutet - ein zusätzlicher Sensor zur Messung der absoluten Flächenmasse bzw. Foliendicke vorgesehen sein. In diesem Fall wird die Messung der Temperatur (-änderung) stromauf nur einen relativen Wert zur Verfügung stellen, der als Korrekturwert dient.

Im folgenden wird die Erfindung anhand eines bevorzugten Ausführungsbeispiels anhand der beigefügten Zeichnung näher erläutert. Die Zeichnung zeigt in:
Figur 1 in stark schematischer Darstellung ein erstes Ausführungsbeispiel eines grundsätzlichen Aufbaus der erfindungsgemäßen Vorrichtung;
Figur 2 ebenfalls in schematischer Darstellung ein zweites Ausführungsbeispiel der erfindungsgemäßen Vorrichtung, aus der der Quertransport der Folie deutlich wird; und
Figur 3 ein Messergebnis der Temperaturmessung.

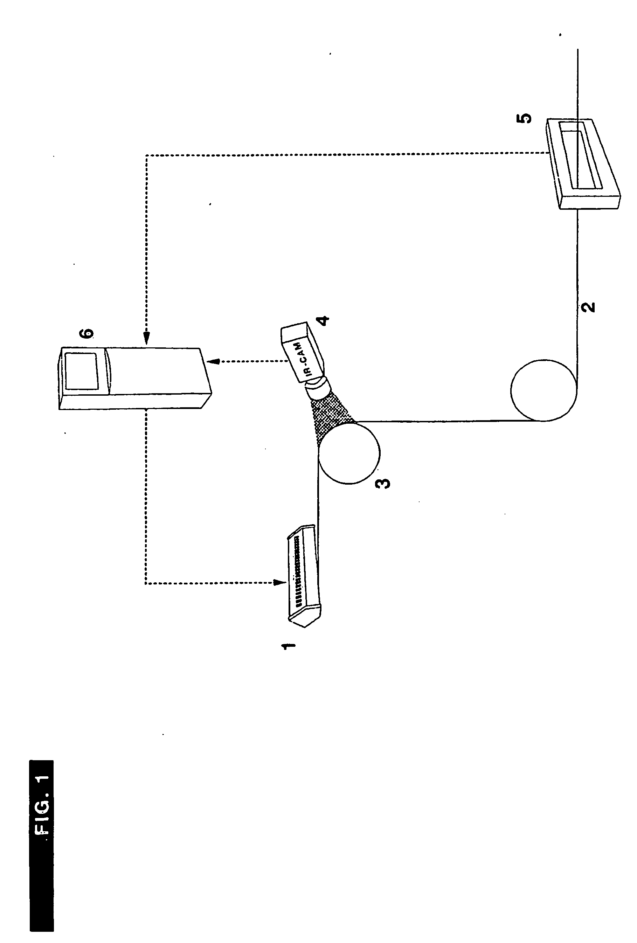

Figur 1 zeigt eine Extrusionsanlage, aus deren Düse 1 eine Folie 2 abgezogen wird. Letztere ist über eine Kühlwalze 3 geführt, wo sie von einer Temperatur von ca. 150 - 250° C beim Austritt aus der Düse 1 auf ca. 30 - 50° C abgekühlt wird.

Der Temperaturverlauf in der Folie wird von einer Infrarotkamera 4 erfasst, die auf die Kühlwalze gerichtet ist. Zusätzlich wird eine Dickenmessung mittels eines Sensors 5 durchgeführt. Die Messergebnisse sowohl der Kamera 4 als auch des Sensors 5 gelangen in einen Rechner 6, der für eine Regelung des Düsenspalts der Extrusionsanlage sorgt.

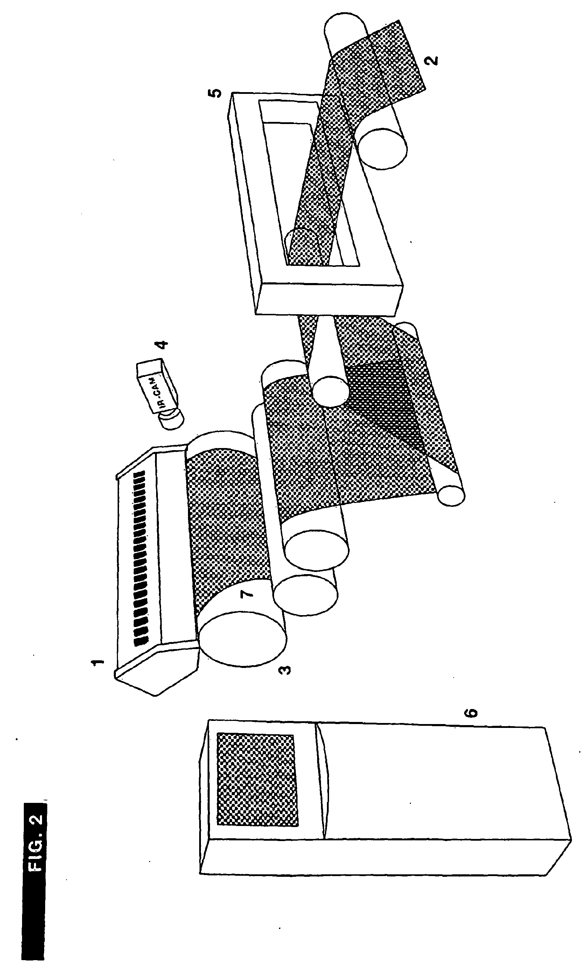

Der Aufbau gemäß Figur 2 ist ähnlich dem nach Figur 1. Hier ist im Bereich der Kühlwalze jedoch besonders gut der Quertransport 7 der Folie 2 zu sehen, der zu einer Verjüngung der Folie führt. In der Zeichnung ist die Düse 1 sehr nah an der Walze 3 dargestellt. Eine derartige Anordnung ist möglich. In der Praxis wird man die Düse jedoch in einigem Abstand von der Kühlwalze 3 anordnen, wobei der Quertransport in dem "freien" Bereich zwischen der Düse und der Walze am größten ist.

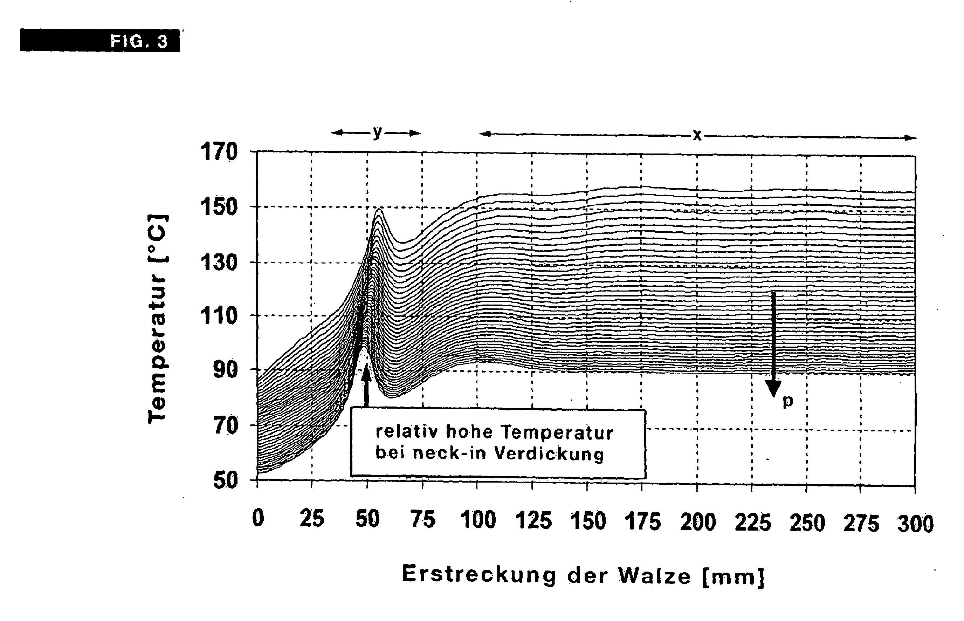

Im Randbereich der Folie ergibt sich ein Temperaturverlauf, wie er in Figur 3 dargestellt ist. Auf der Ordinatenachse ist die Temperatur aufgetragen, während auf der Abszissenachse die Quererstreckung der Walze (in mm) aufgetragen ist. Die Transportrichtung ist mit einem Pfeil P gekennzeichnet.

In dem dargestellten Diagramm sind Temperaturverläufe einzelner Folienbereiche aufgetragen. Im Bereich "X" ist die Temperatur im wesentlichen konstant. Dies lässt auf eine in etwa konstante Folienstärke schließen (wie sie gewünscht ist).

Es ist ferner deutlich in dem mit "Y" gekennzeichneten Bereich ein Abfallen und wieder Ansteigen der Temperatur zu erkennen. Die erhöhte Temperatur ist auf eine Verdickung zurückzuführen. Im Betrieb kann der Spalt so geregelt werden, dass diese Verdickung möglichst gering bleibt. Mit herkömmlichen Meßmethoden war dies nicht möglich.

Der dargestellte Temperaturverlauf ist nur ein Beispiel, die erhaltenen Messergebnisse anzuzeigen. Es ist ohne weiteres möglich, auch Isothermen oder auch relative Temperaturgradienten darzustellen. Die Anzeigemöglichkeiten sind mithin vielfältig.

## Patentansprüche

1. Verfahren zur Herstellung von flachbahnigen Erzeugnissen (2), wobei
- plastisches Material zur Verfügung gestellt wird,
- das plastische Material in einem Spalt zu einem flachbahnigen Erzeugnis (2) verformt wird,
- das flachbahnige Erzeugnis (2) nach Austritt aus dem Spalt in einer Kühlstrecke in Transportrichtung abkühlt, und wobei
- die Kühlstrecke mindestens durch eine Kühlwalze (3) gebildet wird,
**dadurch gekennzeichnet,**
- **dass** die Temperatur des flachbahnigen Erzeugnisses (2) nach dem Austritt aus dem Spalt im wesentlichen zu einem Zeitpunkt flächig erfasst wird,
- **dass** die über die Fläche ermittelten Messwerte zur Einstellung des Spalts verwendet werden, und
- **dass** die Temperatur durch mindestens eine Wärmebildkamera(4) erfasst wird, die auf die Kühlwalze gerichtet ist.

2. Verfahren nach Anspruch 1, **dadurch gekennzeichnet, dass** die Temperatur über eine Anzeigevorrichtung angezeigt wird.

3. Verfahren nach Anspruch 1 oder 2, **dadurch gekennzeichnet, dass** die Breite der Erfassung sich mindestens über die gesamte Breite des flachbahnigen Erzeugnisses (2) erstreckt.

4. Verfahren nach einem der Ansprüche 1 - 3, **dadurch gekennzeichnet, dass** die Temperaturerfassung im wesentlichen unmittelbar hinter dem Spalt beginnt.

5. Verfahren nach einem der Ansprüche 1 - 4, **dadurch gekennzeichnet, dass** der Spalt durch eine Extrusionsdüse gebildet wird und dass die Extrusionsdüse über ihre Breite einstellbar ist.

6. Verfahren nach einem der Ansprüche 1 - 5, **dadurch gekennzeichnet, dass** der Spalt durch zwei Walzen gebildet wird und dass die Walzspaltregelung durch Regelung des Spaltabstands der Walzen zueinander und/oder durch Verschränkungsregelung der Walzen zueinander und/oder durch Biegeregelung und/oder durch Regelung der Winkelgeschwindigkeit der Walzen und/oder Abzugsregelung und/oder durch Einstellung der Balligkeit der Walzen und/oder mittels Heißluft bzw. Infrarotstrahlen erfolgt.

7. Verfahren nach einem der Ansprüche 1 - 6, **dadurch gekennzeichnet, dass** nach der Temperaturmessung zusätzlich eine Flächenmassemessung und/oder eine Dickenmessung des flachbahnigen Erzeugnisses (2) durchgeführt wird.

8. Vorrichtung zur Herstellung, insbesondere zur Überwachung und/oder Regelung der Schichtdicke, von flachbahnigen Erzeugnissen (2), mit
- einem Spalt, aus dem das flachbahnige Erzeugnis (2) austritt, und mit
- einer Kühlstrecke, die stromab des Spalts angeordnet ist und in der das flachbahnige Erzeugnis (2) abkühlt,
- wobei benachbart zu dem Spalt eine Kühlwalze (3) angeordnet ist, die zumindest zum Teil die Kühlstrecke bildet,
**dadurch gekennzeichnet,**
- **dass** mindestens eine Wärmebildkamera (4) mit einem zweidimensionalen Sensor-Array vorgesehen ist, die im Bereich der Kühlstrecke die Temperatur flächig erfasst,
- **dass** die Wärmebildkamera mit einem Rechner (6) in Verbindung steht, der den Spalt regelt, und
- **dass** die Wärmebildkamera (4) auf die Kühlwalze gerichtet ist.

## Claims

1. A method of manufacturing strip products (2), wherein
- plastic material is provided,
- the plastic material is deformed in a gap to form a strip product (2),
- after leaving the gap, the strip product (2) cools in a cooling section in the transport direction, and wherein
- the cooling section is constituted at least by one cooling roller (3),
**characterised in that**
- the temperature of the strip product (2), after leaving the gap, is determined substantially at one time over its area,
- that the measured values determined over the area are used to adjust the gap and,
- that the temperature is determined by at least one thermal imaging camera (4), which is directed towards the cooling roller.

2. A method as claimed in claim 1, **characterised in that** the temperature is indicated by means of an indicating device.

3. A method as claimed in Claim1 or 2, **characterised in that** the width of the determination extends over at least the entire width of the strip product (2).

4. A method as claimed in one of claims 1 - 3, **characterised in that** the temperature determination begins substantially directly after the gap.

5. A method as claimed in one of claims 1 - 4, **characterised in that** the gap is defined by an extrusion nozzle and that the extrusion nozzle is adjustable over its width.

6. A method as claimed in one of claims 1 - 5, **characterised in that** the gap is defined by two rollers and that the roller gap control is effected by controlling the spacing of the rollers from one another and/or by setting control of the rollers with respect to one another and/or by bending control and/or by controlling the angular velocity of the rollers and/or by offtake control and/or by adjusting the crowning of the rollers and/or by means of hot air or infrared beams.

7. A method as claimed in one of claims 1 - 6, **characterised in that** after the temperature measurement, a surface mass measurement and/or a thickness measurement of the strip product (2) is additionally performed.

8. Apparatus for manufacturing, particularly for monitoring and/or controlling the thickness of, strip products (2), including
- a gap, from which the strip product (2) emerges, and including
- a cooling section, which is arranged downstream of the gap and in which the strip product (2) cools
- wherein arranged adjacent to the gap there is a cooling roller (3), which at least partially defines the cooling section,
**characterised in that,**
- at least one thermal imaging camera (4) with a two-dimensional sensor array is provided, which detects the temperature over the area in the region of the cooling section,
- that the thermal imaging camera is connected to a computer (6) which controls the gap, and
- the thermal imaging camera (4) is directed towards the cooling roller.

## Revendications

1. Procédé pour la fabrication de produits en bandes plates (2), dans lequel :
- on fournit une matière plastique,
- la matière plastique est façonnée dans une fente afin de produire un produit en bande plate (2),
- le produit en bande plate (2) est refroidi à la sortie de la fente dans une section de refroidissement dans la direction de transport et
- la section de refroidissement est formée par au moins un rouleau de refroidissement (3),
**caractérisé en ce que**
- la température du produit en bande plate (2) est détectée en surface après sa sortie de la fente essentiellement à un instant donné,
- les valeurs de mesure détectées sur la surface sont utilisées pour l'ajustement de la fente, et
- la température est détectée par au moins une caméra à imagerie thermique (4), qui est orientée vers le rouleau de refroidissement.

2. Procédé selon la revendication 1, **caractérisé en ce que** la température est indiquée par le biais d'un dispositif d'affichage.

3. Procédé selon la revendication 1 ou 2, **caractérisé en ce que** la largeur de la détection s'étend au moins sur toute la largeur du produit en bandes plates (2).

4. Procédé selon l'une quelconque des revendications 1 à 3, **caractérisé en ce que** la détection de la température commence essentiellement immédiatement après la fente.

5. Procédé selon l'une quelconque des revendications 1 à 4, **caractérisé en ce que** la fente est formée par une buse d'extrusion et **en ce que** la buse d'extrusion est ajustable sur sa largeur.

6. Procédé selon l'une quelconque des revendications 1 à 5, **caractérisé en ce que** la fente est formée par deux rouleaux et **en ce que** le réglage de la fente des rouleaux s'effectue par réglage de l'espacement de la fente entre les rouleaux et/ou par le réglage de rapprochement des rouleaux l'un de l'autre et/ou par réglage de la flexion et/ou par réglage de la vitesse angulaire des rouleaux et/ou par réglage de la traction et/ou par ajustement de la rotondité des rouleaux et/ou au moyen d'air chaud ou de rayons infrarouges.

7. Procédé selon l'une quelconque des revendications 1 à 6, **caractérisé en ce qu'**après la mesure de la température, on effectue ensuite une mesure du grammage et/ou une mesure d'épaisseur du produit en bandes plates (2).

8. Dispositif pour la fabrication, en particulier pour la surveillance et/ou l'ajustement de l'épaisseur de couche, de produits en bandes plates (2), comprenant
- une fente, de laquelle sort le produit en bande plate (2) et
- une section de refroidissement, qui est disposée en aval de la fente et dans laquelle le produit en bande plate (2) est refroidi,
- un rouleau de refroidissement (3) étant disposé à côté de la fente et formant au moins en partie la section de refroidissement,
**caractérisé en ce que**
- au moins une caméra à imagerie thermique (4) est pourvue d'un ensemble de capteurs bidimensionnels, qui détectent la température à la surface dans la région de la section de refroidissement,
- la caméra à imagerie thermique est connectée à un ordinateur (6) qui ajuste la fente, et
- la caméra à imagerie thermique (4) est orientée vers le rouleau de refroidissement.
